(19) Europäisches Patentamt
European Patent Office
Office européen des brevets

(11) **EP 3 313 683 B1**

(12) **FASCICULE DE BREVET EUROPEEN**

(45) Date de publication et mention
de la délivrance du brevet:
**25.11.2020 Bulletin 2020/48**

(21) Numéro de dépôt: **16727400.0**

(22) Date de dépôt: **27.05.2016**

(51) Int Cl.:
**B60K 28/02** *(2006.01)*    **B60K 28/10** *(2006.01)*
**B60K 28/16** *(2006.01)*    **B60W 40/09** *(2012.01)*
**B60W 40/103** *(2012.01)*

(86) Numéro de dépôt international:
**PCT/EP2016/062080**

(87) Numéro de publication internationale:
**WO 2016/206913 (29.12.2016 Gazette 2016/52)**

(54) **PROCEDE DE DETERMINATION D' UN INDICATEUR DE DANGEROSITE DE LA CONDUITE D'UN VEHICULE**

VERFAHREN ZUR BESTIMMUNG EINES INDIKATORS FÜR GEFÄHRLICHE FAHRMANÖVER EINES FAHRZEUGS

METHOD FOR DETERMINING A DANGEROUS DRIVING INDICATOR OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1555924**

(43) Date de publication de la demande:
**02.05.2018 Bulletin 2018/18**

(73) Titulaire: **IFP Energies nouvelles
92500 Rueil-Malmaison (FR)**

(72) Inventeurs:
• **THIBAULT, Laurent
92400 Courbevoie (FR)**
• **MOULIN, Philippe
75015 Paris (FR)**

(74) Mandataire: **IFP Energies nouvelles
Département Propriété Industrielle
Rond Point de l'échangeur de Solaize
BP3
69360 Solaize (FR)**

(56) Documents cités:
**US-A1- 2002 198 655    US-A1- 2011 112 739**

## Description

La présente invention concerne le domaine des véhicules, plus particulièrement le domaine de la conduite de véhicules afin de limiter les situations de conduites dangereuses.

Depuis toujours, les conducteurs et les pouvoirs publics souhaitent diminuer le nombre d'accidents et par conséquent les conduites à risque.

Par ailleurs, les compagnies d'assurance automobile ont de tout temps cherché à évaluer la sinistralité de leurs assurés, c'est-à-dire la probabilité d'avoir un accident. La connaissance de cette sinistralité peut permettre aux assurances d'adapter leurs prestations à chaque conducteur. Cette évaluation était historiquement réalisée sur des critères purement statistiques, comme la tranche d'âge ou le type de véhicule conduit.

De nos jours, l'émergence des véhicules et des objets connectés rend possible la qualification de la dangerosité de la conduite à partir de mesures. En effet, il suffit d'un boîtier autonome, d'un téléphone intelligent, d'une connexion au réseau de bord du véhicule... pour disposer de la position et donc de la vitesse et de l'accélération du véhicule. Dans ce contexte, de nouvelles méthodes d'évaluation de la sinistralité sont possibles.

La méthode d'évaluation la plus courante consiste à mettre des seuils sur la valeur maximale de l'accélération du véhicule. Par exemple, la demande brevet EP 1960829 décrit un telle méthode basée sur l'accélération du véhicule. Toutefois, ce type de méthode, uniquement basée sur la vitesse ou l'accélération du véhicule, n'est pas toujours représentative de la dangerosité de la conduite. En effet, une variation de la vitesse ou de l'accélération peut être dépendante de nombreux paramètres extérieurs, tels que les conditions météorologiques, le trafic routier, les routes empruntées... sans traduire une conduite dangereuse.

Côté académique, la modélisation de la dynamique du véhicule est un sujet bien connu et les publications sont nombreuses. Les ouvrages suivants illustrent une telle modélisation :

Kiencke U., & Nielsen L. Automotive Control Systems. For Engine, Driveline, and Vehicle, Springer 2000.
Rajamani R., Vehicle Control and Dynamics, Springer Science and Business Media, 2011

Mais, si ces approches de modélisation sont très représentatives de la dynamique du véhicule, elles ne sont pas adaptées à une utilisation pour qualifier la dangerosité de la conduite. En effet, elles demandent un trop grand nombre de paramètres décrivant le véhicule et surtout un trop grand nombre de mesures. Elles sont donc adaptées uniquement pour des travaux de recherches sur lesquels les véhicules sont abondamment instrumentés mais ne conviennent pas à des véhicules de série sur lesquels la définition technique capteur est réduite au minimum.

La demande de brevet US 2002/0198655 A1 décrit un procédé de détermination et de contrôle d'un glissement d'un véhicule, par utilisation d'un GPS.

La demande de brevet US 2011/0112739 A1 décrit un procédé optimisé d'estimation de la vitesse d'un véhicule, à l'aide d'un GPS. Ce procédé est basé sur une méthode qui permet de calculer des paramètres de glissement, afin de déterminer une vitesse du véhicule pour son contrôle.

La présente invention consiste à déterminer au moins un indicateur de conduite dangereuse au moyen d'un modèle physique simple basé sur la dynamique du véhicule. Selon l'invention, le modèle de dynamique du véhicule permet de déterminer un paramètre de glissement du véhicule, qui est utilisé pour déduire un indicateur de conduite dangereuse représentatif. L'un des objectifs du procédé selon l'invention est d'obtenir une méthode plus représentative et plus robuste que les approches heuristiques basés simplement sur des seuils d'accélération.

## Le procédé selon l'invention

L'invention concerne un procédé de détermination d'au moins un indicateur de dangerosité de la conduite d'un véhicule selon la revendication 1. Pour ce procédé, on réalise les étapes suivantes :

a) on mesure la position et/ou l'altitude dudit véhicule ;
b) on construit un modèle de dynamique du véhicule qui relie la position et/ou l'altitude dudit véhicule à au moins un paramètre de glissement du véhicule ;
c) on détermine au moins un paramètre de glissement du véhicule au moyen dudit modèle de dynamique et de ladite position et/ou altitude mesurée ; et
d) on détermine au moins un indicateur de dangerosité de la conduite du véhicule au moyen dudit paramètre de glissement.

Selon l'invention, on mesure la position et/ou l'altitude dudit véhicule au moyen d'un système de géolocalisation.

Conformément à une mise en œuvre de réalisation de l'invention, préalablement à l'étape de détermination d'un paramètre de glissement, on réalise un prétraitement desdites mesures de position et/ou d'altitude, notamment au moyen d'un sur-échantillonnage et/ou d'un filtrage.

Avantageusement, ledit modèle de dynamique du véhicule est un modèle dans lequel on néglige la largeur du véhicule.

Selon un mode de réalisation, ledit au moins paramètre de glissement du véhicule est l'angle de glissement latéral $\beta$ du véhicule et/ou le taux de glissement longitudinal SR du véhicule.

De préférence, ledit modèle de dynamique du véhicule détermine ledit angle de glissement latéral $\beta$ par une formule du type :

$$\mathrm{F}_{\mathrm{res}}(v) = C_{RR} + k * v + \frac{1}{2} * \rho_{air} * S * C_x * v^2,$$

$$\mathrm{F}_{\mathrm{driving}}(i) = M_{vehicle} * a_{veh}(i) + M_{vehicle} * g * \sin\big(\theta(i)\big) + F_{res}\big(v(i)\big),$$

$$\mathrm{F}_{\mathrm{z}}(i) = M_{vehicle} * g * \cos(\theta(i)),$$

$$\theta(i) = \tan^{-1}(Slope),$$

$$\mathrm{Slope}(i) = \frac{\Delta h(i)}{\Delta d(i)},$$

$$\Delta h(i) = alt_{GPS}(i) - alt_{GPS}(i-1),$$

$$\Delta d(i) = \sqrt{[x_{GPS}(i) - x_{GPS}(i-1)]^2 + [y_{GPS}(i) - y_{GPS}(i-1)]^2},$$

avec

$x_{GPS}, y_{GPS}$ : les coordonnées du véhicule dans le repère de Lambert, correspondant à la position mesurée du véhicule,

$alt_{GPS}$ : l'altitude mesurée du véhicule,

$i$ : l'instant du calcul,

$a_{veh}$ : l'accélération du véhicule,

$M_{vehicle}$ : la masse du véhicule,

$\rho_{air}$ : la masse volumique de l'air,

$S$ : la surface frontale du véhicule,

$C_x$ : le coefficient de trainée aérodynamique frontal du véhicule,

$k$ : le coefficient de frottement visqueux,

$C_{RR}$ : le coefficient de résistance au roulement du véhicule, et

$g$ : l'accélération de la pesanteur.

Selon l'invention, on détermine ledit indicateur de dangerosité par détermination du nombre et/ou de la fréquence de dépassements d'au moins un seuil par ledit paramètre de glissement.

Conformément à un mode de réalisation, on affiche et/ou on enregistre ledit au moins un indicateur de dangerosité pendant la conduite du véhicule.

Avantageusement, on affiche et/ou on enregistre ledit au moins un indicateur de dangerosité sur le tableau de bord dudit véhicule, sur un site internet, ou sur un dispositif portatif autonome, tel qu'un système de géolocalisation ou un téléphone portable.

Préférentiellement, ledit modèle de dynamique du véhicule prend en compte au moins une des conditions suivantes : l'état de la chaussée, les conditions météorologiques, la pression et l'état d'usure des pneumatiques du véhicule, notamment au moyen d'une cartographie.

L'invention concerne également un procédé de commande d'un véhicule. Pour ce procédé, on réalise les étapes suivantes :

a) on détermine au moins un indicateur de dangerosité selon l'une des caractéristiques précédentes ; et

b) on adapte la commande dudit véhicule en fonction dudit indicateur de dangerosité.

En outre, l'invention concerne un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des caractéristiques précédentes, lorsque ledit programme est exécuté sur un ordinateur ou sur un téléphone portable.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé de détermination d'un indicateur de dangerosité de la conduite selon un mode de réalisation de l'invention.

La figure 2 illustre les étapes du procédé de détermination d'un indicateur de dangerosité de la conduite selon un autre mode de réalisation de l'invention.

La figure 3 illustre un paramétrage géométrique du véhicule pour un modèle de dynamique.

La figure 4 illustre une cartographie du taux de glissement longitudinal du véhicule en fonction du coefficient d'adhérence et de conditions météorologiques.

Les figures 5a à 5d représentent respectivement des courbes de la vitesse, du rapport de boite de vitesse, du régime moteur et de la position de la pédale d'accélération en fonction du temps, pour lesquels des essais sont réalisés.

La figure 6 illustre des courbes du ratio de glissement longitudinal estimé et du ratio de glissement mesuré en fonction du temps, pour les essais selon la figure 5,.

La figure 7 illustre les courbes du ratio de glissement longitudinal en fonction du temps et de la pente.

**Description détaillée de l'invention**

La présente invention concerne un procédé de détermination d'au moins un indicateur de dangerosité de la conduite d'un véhicule. Une conduite est qualifiée de dangereuse, si elle peut présenter un risque d'accident, quelle que soit la cause de ce comportement risqué. L'indicateur de dangerosité (appelé également indicateur de conduite dangereuse) permet de quantifier cette dangerosité. Selon l'invention, l'indicateur de dangerosité est déterminé sur la base des conditions de limites d'adhérence du véhicule, c'est-à-dire lors du glissement du véhicule. En effet, dans ces conditions, la sinistralité augmente. Cet indicateur peut être utilisé par le conducteur pour améliorer sa conduite et la rendre plus sûre, ou par un contrôleur qui peut adapter automatiquement la commande du véhicule, ou par un organisme d'assurance ou de location/partage de véhicules afin d'avoir des informations sur la conduite de leur client.

Notations

Dans la suite de la description, on utilise les notations suivantes :

| | | |
|---|---|---|
| $(x_{GPS}, y_{GPS})$ | Coordonnées mesurées par géolocalisation dans le repère de Lambert | [m] |
| $alt_{GPS}$ | Altitude mesurée par géolocalisation | [m] |
| G | Centre de gravité du véhicule | [-] |
| $l_r$ | Distance entre le centre de gravité et l'essieu roue arrière | [m] |
| $l_f$ | Distance entre le centre de gravité et l'essieu roue avant | [m] |
| $\alpha$ | Angle de braquage des roues avant | [rad] |
| $\psi$ | Angle de lacet | [rad] |
| $\theta$ | Angle de la pente de la route | [rad] |
| $\beta_f$ | Angle de glissement latéral de la roue arrière | [rad] |
| $\beta_r$ | Angle de glissement latéral de la roue avant | [rad] |
| $\beta$ | Angle de glissement latéral | [rad] |
| $\omega$ | Vitesse angulaire du véhicule | [rad/s] |
| $Te$ | Période d'échantillonnage | [s] |
| $\mu$ | Coefficient d'adhérence | [-] |
| SR | Taux de glissement longitudinal | [-] |

(suite)

| | | |
|---|---|---|
| $v$ | Vitesse du véhicule | [m/s] |
| $v_x$ | Vitesse du véhicule projetée sur l'axe $x$ | [m/s] |
| $v_y$ | Vitesse du véhicule projetée sur l'axe $y$ | [m/s] |
| $v_T$ | Vitesse latérale du véhicule | [m/s] |
| $v_L$ | Vitesse longitudinale du véhicule | [m/s] |
| $F_{driving}$ | Effort de traction du véhicule à la roue | [N] |
| $F_{res}$ | Résultante des efforts de frottement subis par le véhicule | [N] |
| $F_z$ | Effort normal subi par le véhicule (gravité) | [N] |
| $M_{vehicle}$ | Masse du véhicule | [kg] |
| g | Accélération de la gravité (environ 9,81 m/s$^2$) | [m/s$^2$] |
| SLOPE | Pente instantanée | [-] |
| F$_{driving}$ | Force de traction au niveau du contact sol roue | [N] |
| $F_{res}$ | Résultante des forces de frottement sur le véhicule | [N] |
| F$_z$ | Force de gravité du véhicule | [N] |
| $a_{veh}$ | Accélération instantanée du véhicule | [m/s$^2$] |
| i | Pas de temps des calculs (i-1 correspond au temps précédent) | [s] |

Pour ces notations, l'indice r indique ce qui se réfère à la roue arrière, et l'indice f ce qui se réfère à la roue avant. Les projections sur les axes x et y du repère de Lambert sont notées par les indices x et y.

Le procédé selon l'invention comprend les étapes suivantes (l'étape de prétraitement étant optionnelle) :

1) Mesure de la position et/ou l'altitude

2) Prétraitement des mesures

3) Construction du modèle de dynamique du véhicule

4) Détermination d'un paramètre de glissement

5) Détermination d'un indicateur de dangerosité

Ces étapes peuvent être réalisées en temps réel, lors du déplacement du véhicule.

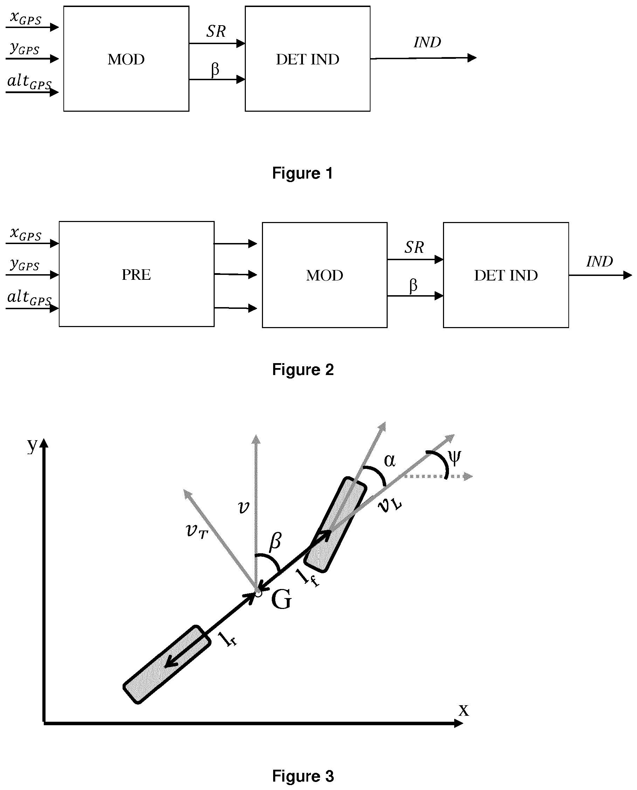

La figure 1 illustre, de manière non limitative, le procédé selon un mode de réalisation de l'invention. A partir de données mesurées ($x_{GPS}$, $y_{GPS}$, $alt_{GPS}$) un modèle de dynamique du véhicule MOD détermine au moins un paramètre de glissement du véhicule. Dans le cas de la figure 1, le modèle de dynamique MOD détermine deux paramètres de glissement ($\beta$, SR). Les paramètres de glissement permettent de déterminer un indicateur IND au moyen d'une étape de détermination d'un indicateur de dangerosité (DET IND).

La figure 2 illustre, de manière non limitative, le procédé selon une alternative de réalisation du procédé illustré à la figure 1. Le mode de réalisation de la figure diffère de celui de la figure 1 par une étape préalable de prétraitement PRE des mesures ($x_{GPS}$, $y_{GPS}$, $alt_{GPS}$).

1) Mesure de la position et/ou l'altitude

Lors de cette étape, il s'agit de déterminer la position et/ou l'altitude du véhicule. De préférence, la position et l'altitude sont mesurées, afin d'obtenir plusieurs paramètres de glissement, ce qui permet de déterminer un indicateur de dangerosité fiable. Toutefois, pour simplifier le procédé selon l'invention, seule la position, ou seule l'altitude du véhicule peut être mesurée.

Selon un mode de réalisation de l'invention, les mesures (position et/ou altitude) sont réalisées au moyen d'un système de géolocalisation, tel qu'un système de positionnement par satellite, tel que le système GPS (de l'anglais Global Positioning System), le système Galileo... Le système de géolocalisation peut, avantageusement, être inclus dans un téléphone portable, du type téléphone intelligent (de l'anglais « Smartphone »).

La prise en compte de l'altitude permet notamment une meilleure estimation du glissement, ce qui permet d'obtenir un indicateur de dangerosité de conduite plus fiable.

De manière avantageuse, la position du véhicule correspond à des coordonnées du véhicule exprimées dans le repère de Lambert, qui est un repère universel : il s'agit de la projection officielle utilisée pour les cartes.

## 2) Prétraitement des mesures

Cette étape est optionnelle, elle est réalisée avant la détermination d'au moins un paramètre de glissement (cf. figure 2). Cette étape peut être réalisée avant ou après l'étape de construction du modèle de dynamique.

Les mesures disponibles (position et/ou altitude) pour qualifier la conduite peuvent provenir d'un boitier connecté, d'un téléphone intelligent.... En conséquence, leur qualité est variable et parfois perfectible et il est préférable d'en assurer un prétraitement avant de pouvoir les utiliser, afin d'obtenir un indicateur fiable. Ce prétraitement peut être variable, car dépendant de la qualité des données d'entrée. Dans le cas le plus courant, le prétraitement des mesures peut consister en un sur-échantillonnage des mesures, puis un filtrage (par exemple au moyen d'un filtre passe-bas). De manière alternative, l'étape de prétraitement peut consister seulement en un sur-échantillonnage, ou seulement en un filtrage.

## 3) Construction du modèle de dynamique du véhicule

On appelle modèle de dynamique du véhicule, un modèle qui relie au moins un paramètre de glissement (des pneumatiques du véhicule) à la position et/ou l'altitude du véhicule. Le modèle prend en compte la dynamique du véhicule (vitesse, accélération...) pour déterminer le glissement du véhicule, c'est-à-dire un mouvement non désiré et non contrôlé du véhicule.

Selon un mode de réalisation de l'invention, le modèle de dynamique du véhicule prend en compte au moins une, de préférence toutes, des conditions suivantes : l'état de la chaussée, les conditions météorologiques, la pression et l'état d'usure des pneumatiques du véhicule, notamment au moyen d'une cartographie. Cette cartographie peut relier notamment le paramètre de glissement au coefficient d'adhérence des pneumatiques. Ainsi, l'indicateur de conduite dangereuse est rendu plus représentatif de la dangerosité.

Un paramètre de glissement des pneumatiques du véhicule peut être l'angle de glissement latéral du véhicule, noté $\beta$. L'angle de glissement latéral correspond à l'angle formé entre le vecteur vitesse du véhicule et l'axe longitudinal du véhicule.

Un autre paramètre de glissement des pneumatiques du véhicule peut être le taux de glissement longitudinal, noté SR. Le taux de glissement longitudinal traduit le glissement du pneumatique de la roue par rapport au sol. Ce taux de glissement dépend notamment du coefficient d'adhérence du pneumatique sur le sol.

Selon un mode de réalisation, on suppose que les roues restent au contact d'un sol plat. De plus, on suppose que les suspensions sont rigides, ce qui revient à négliger le roulis et le tangage. En outre, on peut modéliser le véhicule par un modèle de type « bicyclette ». Cela revient à considérer que la largeur du véhicule est négligeable, et par conséquent que les roues gauches et droites ont un comportement similaire.

La figure 3 schématise le modèle « bicyclette », et les angles utilisés pour ce mode de réalisation. Sur cette figure, seules les roues sont représentées. G représente le centre d'inertie du véhicule. $l_f$ et $l_r$ représentent respectivement la distance entre le centre de gravité G et les essieux avant et arrière. Le système de référence est défini par le repère (x,y) qui correspond au repère de Lambert. v est la vitesse du véhicule. $v_f$ et $v_r$ sont respectivement la vitesse de la roue avant et arrière. $\beta$ est l'angle de glissement latéral. $\beta_f$ et $\beta_r$ (non représentés) correspondent aux angles de glissement latéral des roues avant et arrière, respectivement. $\psi$ est l'angle de lacet. $v_L$ et $v_T$ sont les projections de la vitesse du véhicule dans le repère associé au châssis du véhicule.

Selon une variante de réalisation de l'invention, la position est mesurée et le paramètre de glissement déterminé par le modèle de dynamique est l'angle de glissement latéral $\beta$. Pour cette variante, on peut déterminer l'angle de glissement latéral $\beta$ par une formule du type :

$$\beta(i) = \frac{v_{fy}(i) + v_{ry}(i)}{2 * v_L(i)}$$

avec :

i : l'instant du calcul,

$v_{fy}$ : la projection sur l'axe y de la vitesse de la roue avant,

$v_{ry}$ : la projection sur l'axe y de la vitesse de la roue arrière, et

$v_L$ : la projection sur l'axe longitudinal du véhicule de la vitesse du véhicule,

les projections des vitesses étant fonction de ladite position du véhicule.

Pour cette estimation de l'angle de glissement latéral $\beta$, on peut réaliser la suite d'étapes suivantes :

*a) Calcul de l'angle de braquage des roues avant $\alpha$*

Dans cette section, le calcul de l'angle de braquage des roues avant $\alpha$ est détaillé.

Le calcul de l'angle de lacet, à partir des coordonnées (position), peut être obtenu à partir de l'équation suivante :

$$\psi(i) = \frac{180}{\pi} * \tan^{-1}\left(\frac{x_{GPS}(i) - x_{GPS}(i-1)}{y_{GPS}(i) - y_{GPS}(i-1)}\right)$$

La vitesse angulaire du véhicule peut être donnée par une formule du type :

$$\omega(i) = \frac{\psi(i) - \psi(i-1)}{T_e}$$

Les projections $v_x$ et $v_y$ de la vitesse $v$ du véhicule dans le référentiel ($x,y$) peuvent être données par :

$$v_x(i) = \frac{x_{GPS}(i) - x_{GPS}(i-1)}{T_e}$$

$$v_y(i) = \frac{y_{GPS}(i) - y_{GPS}(i-1)}{T_e}$$

Les projections $v_L$ et $v_T$ de la vitesse $v$ dans le référentiel du châssis du véhicule peuvent être données par :

$$v_L(i) = v_x(i) * \cos\psi(i) + v_y(i) * \sin\psi(i)$$

$$v_T(i) = -v_x(i) * \sin\psi(i) + v_y(i) * \cos\psi(i)$$

L'angle de braquage peut alors être calculé :

$$\alpha(i) = \tan^{-1}\left(\frac{\omega(i) * (l_r + l_f)}{v_L(i)}\right)$$

*b) Calcul de l'angle de glissement $\beta$*

Dans cette section, le calcul de l'angle de glissement latéral $\beta$ est détaillé. La méthode choisie consiste à prendre la moyenne l'angle de glissement latéral des roues avant et arrière.

Pour ce faire, on calcule les projections $v_{fy}$ et $v_{ry}$ sur l'axe $y$ des vitesses des roues avant et arrière $v_f$ et $v_r$ respectivement :

$$v_{fy}(i) = (v_T(i) + l_f * \omega(i)) * \cos\alpha(i) - v_L(i) * \sin\alpha(i)$$

$$v_{ry}(i) = v_T(i) - l_r * \omega(i)$$

On en déduit $\beta$ par une équation de la forme :

$$\beta(i) = \frac{\beta_f(i) + \beta_r(i)}{2} = \frac{v_{fy}(i) + v_{ry}(i)}{2 * v_L(i)}$$

Ainsi, en combinant les équation, on obtient un modèle de dynamique du véhicule qui relie l'angle de glissement latéral $\beta$ à la position du véhicule.

Selon une variante de réalisation (pouvant être combinée à la variante précédemment décrite), on mesure la position et l'altitude du véhicule, et le paramètre de glissement déterminé par le modèle de dynamique est le taux de glissement longitudinal SR. Pour cette variante de réalisation, on peut déterminer le taux de glissement longitudinal SR au moyen d'une cartographie fonction du coefficient d'adhérence $\mu$ du véhicule et de conditions météorologiques (état de la route).

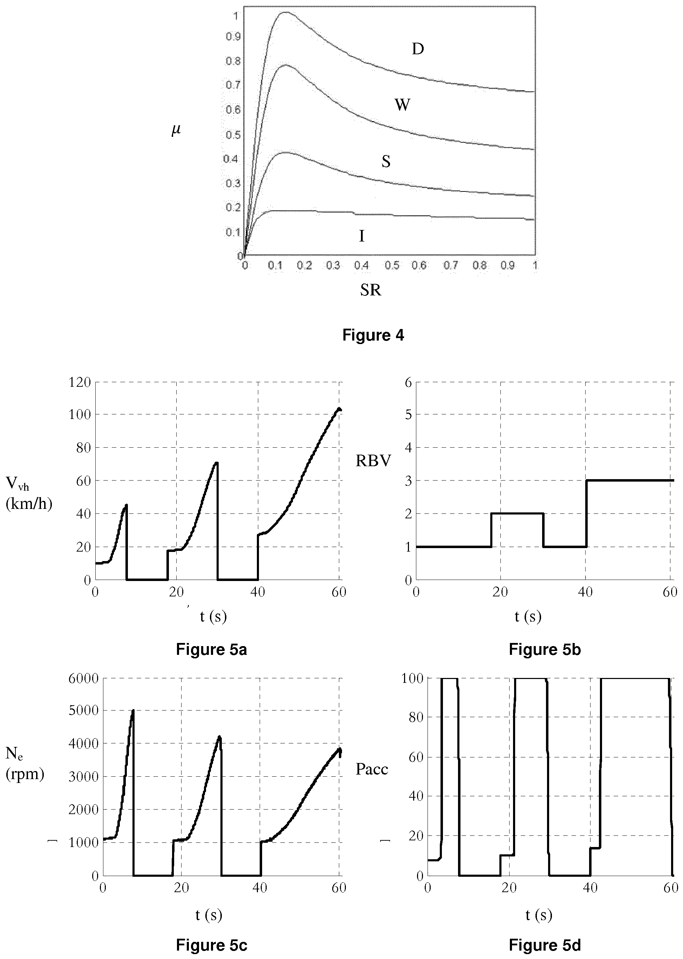

La figure 4 est un exemple de cartographie représentant plusieurs courbes du coefficient d'adhérence $\mu$ en fonction du taux de glissement longitudinal SR pour plusieurs conditions météorologiques : D pour route sèche, W pour route humide, S pour route enneigée, et I pour route gelée. Les conditions météorologiques peuvent être indiquées par l'utilisateur, ou peuvent être connues par le système de géolocalisation, notamment par connexion sur internet. Alternativement, les conditions météorologiques peuvent être connues par des capteurs présents sur le véhicule.

Pour une estimation du coefficient d'adhérence $\mu$, on peut mettre en œuvre les étapes suivantes :

*a) Calcul de l'angle de la pente $\theta$*

Dans cette section, le calcul de l'angle de la pente θ est détaillé.

La distance parcourue à chaque instant est donnée par :

$$\Delta d(i) = \sqrt{[x_{GPS}(i) - x_{GPS}(i-1)]^2 + [y_{GPS}(i) - y_{GPS}(i-1)]^2}$$

La variation d'altitude peut se calculer simplement via l'altitude issue des mesures :

$$\Delta h(i) = alt_{GPS}(i) - alt_{GPS}(i-1)$$

En conséquence, la pente instantanée peut s'obtenir par :

$$\text{Slope(i)} = \frac{\Delta h(i)}{\Delta d(i)}$$

Selon une conception particulière de l'invention, à ce stade on peut appliquer un filtre de type moyenne glissante sur la pente pour capter seulement les variations significatives et limiter l'impact du bruit.

L'angle de la pente peut être estimé par une équation de la forme :

$$\theta(i) = \tan^{-1}(Slope)$$

*b) Calcul du coefficient d'adhérence $\mu$*

Pour calculer le coefficient d'adhérence $\mu$, on calcule la force de traction au niveau du contact sol roue $F_{driving}$ et la force de gravité normale $F_z$

$$\text{F}_z(i) = M_{vehicle} * g * \cos(\theta(i))$$

$$\text{F}_{driving}(i) = M_{vehicle} * a_{veh}(i) + M_{vehicle} * g * \sin(\theta(i)) + F_{res}(v(i))$$

Avec $a_{veh}$ l'accélération instantanée du véhicule, et $F_{res}$ la résultante des forces de frottements qui s'appliquent sur le véhicule, cette résultante étant donnée par la relation suivante appelée « loi de route ». Ce terme s'exprime directement en fonction de la vitesse et des caractéristiques du véhicule

$$F_{res}(v) = C_{RR} + k * v + \frac{1}{2} * \rho_{air} * S * C_x * v^2$$

L'accélération instantanée du véhicule $a_{veh}$ peut être obtenue (selon les capteurs disponibles) à partir d'un accéléromètre et/ou à partir de la vitesse véhicule estimée à partir de la position mesurée. Selon un exemple, elle peut être estimée à partir d'une équation de la forme :

$$a_{veh} = \frac{v(i) - v(i-1)}{T_e}$$

On peut en déduire le coefficient d'adhérence $\mu$ par une équation du type :

$$\mu(i) = \frac{F_{driving}(i)}{F_z(i)}$$

Ainsi, en combinant les équations, on obtient un modèle de dynamique du véhicule qui relie le coefficient d'adhérence à la position et à l'altitude du véhicule, puis au moyen d'une cartographie on en déduit le taux de glissement longitudinal SR.

Le procédé selon l'invention n'est pas limité au modèle décrit ci-dessous, d'autres modèles peuvent être mis en œuvre, notamment des modèles prenant en compte la largeur du véhicule.

4) Détermination d'un paramètre de glissement

Lors de cette étape, on détermine au moins un paramètre de glissement du véhicule au moyen du modèle de dynamique construit à l'étape précédente et au moyen des mesures (prétraitées ou non) réalisées précédemment.

Selon un mode de réalisation de l'invention, lors de cette étape, on détermine deux paramètres de glissement : l'angle de glissement latéral $\beta$ et le taux de glissement longitudinal SR (cf. figures 1 et 2). Cette détermination des deux paramètres de glissement peut être réalisées sur la base de mesures de la position et de l'altitude.

A partir de l'angle de glissement latéral $\beta$ déterminé, on estime le glissement des pneumatiques par une cartographie dépendant de deux paramètres : le coefficient d'adhérence $\mu$ et l'angle de glissement déterminé $\beta$. Cette cartographie peut dépendre de l'état de la chaussée, en particulier elle est très différente si la route est sèche ou humide (ce qui peut être estimé à partir de la météo), et de l'état des pneus : de leur pression et de leur usure.

Selon une alternative, lors de cette étape, on détermine un seul paramètre de glissement : l'angle de glissement latéral $\beta$. Cette détermination peut être réalisée sur la base de mesures de la position.

Alternativement, lors de cette étape, on détermine un seul paramètre de glissement : le taux de glissement longitudinal SR. Cette détermination peut être réalisée sur la base de mesures de l'altitude, ou sur la base de mesures de la position et de l'altitude.

5) Détermination d'un indicateur de dangerosité de conduite

Il s'agit de déterminer au moins un indicateur de dangerosité de conduite à partir du ou des paramètres de glissement déterminés à l'étape précédente. L'indicateur de conduite dangereuse peut prendre la forme d'une valeur, d'une note...

Conformément à une variante de réalisation de l'invention, l'indicateur de conduite dangereuse peut être déterminé en mettant en œuvre les étapes suivantes :

- on choisit au moins un seuil (au moins un seuil par paramètre) de conduite dangereuse pour le(s) paramètre(s) de glissement ou leurs dérivés ;
- on détermine si le(s) paramètre(s) de glissement ou leur dérivés dépasse(nt) le seuil choisi ;
- on quantifie le nombre de fois et/ou la fréquence (temporelle ou kilométrique) pour lesquels le(s) paramètre(s) de glissement ou leur dérivés ont dépassé le seuil choisi ; et
- on déduit du nombre et/ou de la fréquence un indicateur de dangerosité.

En effet, la comparaison des paramètres de glissement (ou leurs dérivés) avec des seuils permet de déterminer si le conducteur se trouve souvent dans des conditions limites d'adhérence, pour lesquels la sinistralité augmente.

L'indicateur peut consister au nombre ou à la fréquence de dépassement de seuil. Alternativement l'indicateur peut être une valeur moyenne ou une note (par exemple sur 10) représentative des différents nombres et/ou fréquences calculés pour chaque paramètre de glissement.

Une fois le ou les indicateurs de dangerosité de conduite déterminés, on peut enregistrer et/ou transmettre cette information au conducteur (ou à tout autre personne) au moyen d'un affichage. Cet enregistrement et/ou affichage peut être réalisé à bord du véhicule : sur le tableau de bord, sur un dispositif portatif autonome, tel qu'un appareil de géolocalisation (de type GPS), un téléphone portable (de type ordiphone, traduction de l'anglicisme smartphone). Il est également possible d'enregistrer et d'afficher cet indicateur sur un site internet, que le conducteur peut consulter postérieurement à sa conduite. De plus, ce ou ces indicateurs de conduite dangereuse peuvent être partagés avec un organisme d'assurance, de partage de voitures, de locations de voitures, un gestionnaire de flotte de véhicules ... de manière à indiquer si la conduite de leur client est dangereuse ou non, afin qu'ils puissent adapter leur prestations : frais d'assurance, de location...

La présente invention concerne également un procédé de commande d'un véhicule, dans lequel on réalise les étapes suivantes :

- on détermine au moins un indicateur de dangerosité au moyen du procédé précédemment décrit ; et
- on adapte la commande du véhicule en fonction de l'indicateur de dangerosité : cette adaptation peut être réalisée directement par le conducteur qui se rend compte de la dangerosité de sa conduite, ou peut être réalisée par un contrôleur du véhicule qui limite les situations dangereuses.

Le procédé selon l'invention peut être utilisé pour les véhicules automobiles. Toutefois il peut être utilisé dans le domaine du transport routier, le domaine des deux-roues, le domaine ferroviaire, le domaine naval, le domaine aéronautique, le domaine des aéroglisseurs, et le domaine des véhicules amphibies...

L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en œuvre du procédé tel que décrit ci-dessus, lorsque le programme est exécuté sur un ordinateur ou un téléphone portable.

Exemples illustratifs

L'objectif de ces exemples est de comparer le glissement réel mesuré avec l'estimation réalisée suivant le procédé précédemment décrit.

Les essais consistent en trois accélérations de type « Pied à Fond » en 1ère, 2ème et 3ème vitesse, comme illustrées sur les figures 5a à 5d, qui représentent respectivement la vitesse du véhicule $v_{vh}$, le rapport de boîte de vitesse RBV, le régime moteur $N_e$, et la position de la pédale d'accélération $P_{acc}$. Sur ces essais, l'accélération du véhicule est maximale puisque le moteur thermique est utilisé à son couple maximal. En conséquence, un glissement longitudinal est inévitable.

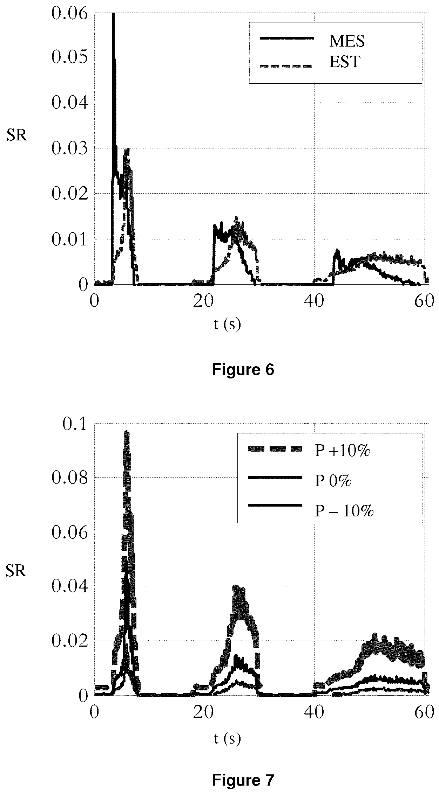

Les résultats de l'estimation EST selon le procédé selon l'invention, et des mesures MES du glissement longitudinal SR sont donnés sur la figure 6. On observe que malgré le nombre très réduit de mesures utilisées pour l'estimation (seulement la position et l'altitude issues d'un système de géolocalisation), on parvient à identifier les phases où le glissement se produit. De plus, on arrive également à estimer l'amplitude du glissement qui est de manière fort logique plus important sur les premiers rapports de boîte.

Une des valeurs ajoutées de la présente invention est la prise en compte la pente sur l'estimation du glissement. La figure 8 montre l'impact de la pente P sur le taux de glissement longitudinal SR. Il s'agit toujours du même cas test (figures 5a à 5d) et l'effet de la pente est obtenu en simulation. Pour ces essais, on fait varier la pente P de -10% à +10 % en passant par 0%. On observe un impact significatif de la pente sur l'estimation du glissement. En conséquence, sa prise en compte est très avantageuse. Dans le cas contraire, la qualification de la dangerosité de la conduite est biaisée dès lors que la route présentera une pente non négligeable.

**Revendications**

1. Procédé de détermination d'au moins un indicateur de dangerosité de la conduite d'un véhicule, dans lequel on réalise les étapes suivantes :

   a) on mesure la position et/ou l'altitude dudit véhicule ;

b) on construit un modèle de dynamique du véhicule qui relie la position et/ou l'altitude dudit véhicule à au moins un paramètre de glissement du véhicule ;

c) on détermine au moins un paramètre de glissement du véhicule au moyen dudit modèle de dynamique et de ladite position et/ou altitude mesurée ; et

d) on détermine au moins un indicateur de dangerosité de la conduite du véhicule au moyen dudit paramètre de glissement, par détermination du nombre et/ou de la fréquence de dépassements d'au moins un seuil par ledit paramètre de glissement.

2. Procédé selon la revendication 1, dans lequel on mesure la position et/ou l'altitude dudit véhicule au moyen d'un système de géolocalisation.

3. Procédé selon l'une des revendications précédentes, dans lequel préalablement à l'étape de détermination d'un paramètre de glissement, on réalise un prétraitement desdites mesures de position et/ou d'altitude, notamment au moyen d'un sur-échantillonnage et/ou d'un filtrage.

4. Procédé selon l'une des revendications précédentes, dans lequel ledit modèle de dynamique du véhicule est un modèle dans lequel on néglige la largeur du véhicule.

5. Procédé selon l'une des revendications précédentes, dans lequel ledit au moins paramètre de glissement du véhicule est l'angle de glissement latéral $\beta$ du véhicule et/ou le taux de glissement longitudinal SR du véhicule.

6. Procédé selon la revendication 5, dans lequel ledit modèle de dynamique du véhicule détermine ledit angle de glissement latéral $\beta$ par une formule:

$$\beta(i) = \frac{v_{fy}(i) + v_{ry}(i)}{2 * v_L(i)}$$

avec :

i : l'instant du calcul,
$v_{fy}$ : la projection sur l'axe y de la vitesse de la roue avant,
$v_{ry}$ : la projection sur l'axe y de la vitesse de la roue arrière, et
$v_L$ : la projection sur l'axe longitudinal du véhicule de la vitesse du véhicule,
x, y : les axes du repère de Lambert,

les projections desdites vitesses étant fonction de ladite position du véhicule.

7. Procédé selon la revendication 6, dans lequel lesdites projections des vitesses dudit modèle de dynamique sont déterminées par des relations:

$$v_{ry}(i) = v_T(i) - l_r * \omega(i) \ ,$$

$$v_{fy}(i) = (v_T(i) + l_f * \omega(i)) * \cos \alpha(i) - v_L(i) * \sin \alpha(i),$$

$$\alpha(i) = \tan^{-1}(\frac{\omega(i) * (l_r + l_f)}{v_L(i)}),$$

$$v_L(i) = v_x(i) * \cos \psi(i) + v_y(i) * \sin \psi(i),$$

$$v_T(i) = -v_x(i) * \sin \psi(i) + v_y(i) * \cos \psi(i),$$

$$v_x(i) = \frac{x_{GPS}(i) - x_{GPS}(i-1)}{T_e},$$

$$v_y(i) = \frac{y_{GPS}(i) - y_{GPS}(i-1)}{T_e},$$

$$\omega(i) = \frac{\psi(i) - \psi(i-1)}{T_e},$$

$$\psi(i) = \frac{180}{\pi} * \tan^{-1}\left(\frac{x_{GPS}(i) - x_{GPS}(i-1)}{y_{GPS}(i) - y_{GPS}(i-1)}\right),$$

avec

$x_{GPS}, y_{GPS}$ : les coordonnées du véhicule dans le repère de Lambert, correspondant à la position mesurée du véhicule,
i : l'instant du calcul,
$T_e$ : la période d'échantillonnage,
$l_f$ : la distance entre le centre de gravité et les roues avant du véhicule, et
$l_r$ : la distance entre le centre de gravité et les roues arrière du véhicule.

8. Procédé selon l'une des revendications 5 à 7, dans lequel ledit modèle de dynamique détermine le taux de glissement SR du véhicule au moyen d'une cartographie fonction du coefficient d'adhérence $\mu$ du véhicule et de conditions météorologiques.

9. Procédé selon la revendication 8, dans lequel on détermine ledit coefficient d'adhérence $\mu$ du véhicule par une formule:

$$\mu(i) = \frac{F_{driving}(i)}{F_z(i)}$$

avec :

$$F_{res}(v) = C_{RR} + k * v + \frac{1}{2} * \rho_{air} * S * C_x * v^2,$$

$$F_{driving}(i) = M_{vehicle} * a_{veh}(i) + M_{vehicle} * g * \sin(\theta(i)) + F_{res}(v(i)),$$

$$F_z(i) = M_{vehicle} * g * \cos(\theta(i)),$$

$$\theta(i) = \tan^{-1}(Slope),$$

$$Slope(i) = \frac{\Delta h(i)}{\Delta d(i)},$$

$$\Delta h(i) = alt_{GPS}(i) - alt_{GPS}(i-1),$$

$$\Delta d(i) = \sqrt{[x_{GPS}(i) - x_{GPS}(i-1)]^2 + [y_{GPS}(i) - y_{GPS}(i-1)]^2},$$

avec

$x_{GPS}, y_{GPS}$ : les coordonnées du véhicule dans le repère de Lambert, correspondant à la position mesurée du véhicule,
$alt_{GPS}$ : l'altitude mesurée du véhicule,
$i$ : l'instant du calcul,
$a_{veh}$ : l'accélération du véhicule,
$M_{vehicule}$ : la masse du véhicule,
$\rho_{air}$ : la masse volumique de l'air,
$S$ : la surface frontale du véhicule,
$C_x$ : le coefficient de trainée aérodynamique frontal du véhicule,
$k$ : le coefficient de frottement visqueux,
$v$ : la vitesse du véhicule,
$C_{RR}$ : le coefficient de résistance au roulement du véhicule, et
$g$ : l'accélération de la pesanteur.

10. Procédé selon l'une des revendications précédentes, dans lequel on affiche et/ou on enregistre ledit au moins un indicateur de dangerosité pendant la conduite du véhicule.

11. Procédé selon la revendication 10, dans lequel on affiche et/ou on enregistre ledit au moins un indicateur de dangerosité sur le tableau de bord dudit véhicule, sur un site internet, ou sur un dispositif portatif autonome, tel qu'un système de géolocalisation ou un téléphone portable.

12. Procédé selon l'une des revendications précédentes, dans lequel ledit modèle de dynamique du véhicule prend en compte au moins une des conditions suivantes : l'état de la chaussée, les conditions météorologiques, la pression et l'état d'usure des pneumatiques du véhicule, notamment au moyen d'une cartographie.

13. Procédé de commande d'un véhicule, **caractérisé en ce qu'**on réalise les étapes suivantes :

a) on détermine au moins un indicateur de dangerosité selon l'une des revendications précédentes ; et
b) on adapte la commande dudit véhicule en fonction dudit indicateur de dangerosité.

14. Produit programme d'ordinateur téléchargeable depuis un réseau de communication et/ou enregistré sur un support lisible par ordinateur et/ou exécutable par un processeur ou un serveur, **caractérisé en ce que** ledit produit programme d'ordinateur comprend des instructions de code de programme pour la mise en œuvre du procédé selon l'une des revendications précédentes, lorsque ledit programme est exécuté sur un ordinateur ou sur un téléphone portable.

**Patentansprüche**

1. Verfahren zur Bestimmung mindestens eines Gefährlichkeitsindikators der Fahrweise eines Fahrzeugs, bei dem die folgenden Schritte durchgeführt werden:

a) Messen der Position und/oder der Höhe des Fahrzeugs;
b) Erstellen eines Dynamikmodells des Fahrzeugs, das die Position und/oder die Höhe des Fahrzeugs mit mindestens einem Schlupfparameter des Fahrzeugs verbindet;
c) Bestimmen mindestens eines Schlupfparameters des Fahrzeugs mittels des Dynamikmodells und der gemessenen Position und/oder Höhe; und
d) Bestimmen mindestens eines Gefährlichkeitsindikators der Fahrweise des Fahrzeugs mittels des Schlupfparameters, durch Bestimmung der Anzahl und/oder der Häufigkeit von Überschreitungen mindestens einer Schwelle durch den Schlupfparameter.

2. Verfahren nach Anspruch 1, wobei die Position und/oder die Höhe des Fahrzeugs mittels eines Geolokalisierungssystems gemessen werden.

3. Verfahren nach einem der vorhergehenden Ansprüche, wobei vor dem Schritt der Bestimmung eines Schlupfparameters eine Vorbearbeitung der Positions- und/oder Höhenmesswerte insbesondere mittels einer Überabtastung und/oder einer Filterung durchgeführt wird.

4. Verfahren nach einem der vorhergehenden Ansprüche, wobei das Dynamikmodell des Fahrzeugs ein Modell ist, bei dem die Breite des Fahrzeugs vernachlässigt wird.

5. Verfahren nach einem der vorhergehenden Ansprüche, wobei der mindestens eine Schlupfparameter des Fahrzeugs der seitliche Schlupfwinkel β des Fahrzeug und/oder die Längsschlupfrate SR des Fahrzeugs ist.

6. Verfahren nach Anspruch 5, wobei das Dynamikmodell des Fahrzeugs den seitlichen Schlupfwinkel β durch eine Formel bestimmt:

$$\beta(i) = \frac{v_{fy}(i) + v_{ry(i)}}{2 * v_L(i)}$$

mit:

i: dem Zeitpunkt der Berechnung,
$v_{fy}$: der Projektion auf die Y-Achse der Geschwindigkeit des Vorderrads,
$v_{ry}$: der Projektion auf die Y-Achse der Geschwindigkeit des Hinterrads, und
$v_L$: der Projektion auf die Längsachse des Fahrzeugs der Geschwindigkeit des Fahrzeugs,
x,y: den Achsen des Lambert-Koordinatensystems,

wobei die Projektionen der Geschwindigkeiten von der Position des Fahrzeugs abhängen.

7. Verfahren nach Anspruch 6, wobei die Projektionen der Geschwindigkeiten des Dynamikmodells durch Beziehungen bestimmt werden:

$$v_{ry}(i) = v_T(i) - l_r * \omega(i),$$

$$v_{fy}(i) = \left(v_T(i) + l_f * \omega(i)\right) * cos\, a(i) - v_L(i) * sina(i),$$

$$a(i) = tan^{-1}\left(\frac{\omega(i)*(l_r+l_f)}{v_L(i)}\right),$$

$$v_L(i) = v_x(i) * cos\psi(i) + v_y(i) * sin\psi(i),$$

$$v_T(i) = v_x(i) * sin\psi(i) + v_y(i) * cos\psi(i),$$

$$v_x(i) = \frac{x_{GPS}(i)-x_{GPS}(i-1)}{T_e},$$

$$v_y(i) = \frac{y_{GPS}(i)-y_{GPS}(i-1)}{T_e},$$

$$\omega(i) = \frac{\psi(i)-\psi(i-1)}{T_e},$$

$$\psi(i) = \frac{180}{\pi} * tan^{-1}\left(\frac{x_{GPS}(i)-x_{GPS}(i-1)}{y_{GPS}(i)-y_{GPS}(i-1)}\right),$$

mit

$x_{GPS}, y_{GPS}$: den Koordinaten des Fahrzeugs im Lambert-Koordinatensystem, entsprechend der gemessenen Position des Fahrzeugs,
i: dem Zeitpunkt der Berechnung,
$T_e$: der Abtastperiode,
$l_f$: dem Abstand zwischen dem Schwerpunkt und den Vorderrädern des Fahrzeugs, und
$l_r$: dem Abstand zwischen dem Schwerpunkt und den Hinterrädern des Fahrzeugs.

8. Verfahren nach einem der Ansprüche 5 bis 7, wobei das Dynamikmodell die Schlupfrate SR des Fahrzeugs mittels eines Kennfelds abhängig vom Haftungskoeffizienten μ des Fahrzeugs und Wetterbedingungen bestimmt.

9. Verfahren nach Anspruch 8, wobei der Haftungskoeffizient μ des Fahrzeugs durch eine Formel bestimmt wird:

$$\mu(i) = \frac{F_{driving}(i)}{F_z(i)}$$

mit:

$$F_{res}(v) = C_{RR} + k * v + \frac{1}{2} * \rho_{air} * S * C_x * v^2,$$

$$F_{driving}(i) = M_{vehicle} * a_{veh}(i) + M_{vehicle} * g * sin(\theta(i)) + F_{res}(v(i)),$$

$$F_z(i) = M_{vehicle} * g * cos(\theta(i)),$$

$$\theta(i) = tan^{-1}(Slope),$$

$$Slope(i) = \frac{\Delta h(i)}{\Delta d(i)},$$

$$\Delta h(i) = alt_{GPS}(i) - alt_{GPS}(i-1),$$
$$\Delta d(i) = \sqrt{[x_{GPS}(i) - x_{GPS}(i-1)]^2 + [y_{GPS}(i) - y_{GPS}(i-1)]^2},$$

mit:

$x_{GPS}, y_{GPS}$: den Koordinaten des Fahrzeugs im Lambert-Koordinatensystem, entsprechend der gemessenen Position des Fahrzeugs,
$alt_{GPS}$: der gemessenen Höhe des Fahrzeugs,
i: dem Zeitpunkt der Berechnung,
$a_{veh}$: der Beschleunigung des Fahrzeugs,
$M_{vehicule}$: der Masse des Fahrzeugs,
$\rho_{air}$: der Massendichte der Luft,
S: der Stirnfläche des Fahrzeugs,
$C_x$: dem frontalen aerodynamischen Luftwiderstandskoeffizient des Fahrzeugs,
k: dem viskosen Reibungskoeffizient,
v: der Geschwindigkeit des Fahrzeugs,
$C_{RR}$: dem Rollwiderstandskoeffizient des Fahrzeugs, und

g: der Beschleunigung der Schwerkraft.

**10.** Verfahren nach einem der vorhergehenden Ansprüche, wobei der mindestens eine Gefährlichkeitsindikator während des Fahrens des Fahrzeugs angezeigt und/oder gespeichert wird.

**11.** Verfahren nach Anspruch 10, wobei der mindestens eine Gefährlichkeitsindikator auf dem Armaturenbrett des Fahrzeugs, auf einer Website oder einer autonomen tragbaren Vorrichtung wie einem Geolokalisierungssystem oder einem tragbaren Telefon angezeigt und/oder gespeichert wird.

**12.** Verfahren nach einem der vorhergehenden Ansprüche, wobei das Dynamikmodell des Fahrzeugs mindestens eine der folgenden Bedingungen berücksichtigt: Straßenzustand, Wetterbedingungen, Druck und Abnutzungszustand der Reifen des Fahrzeugs, insbesondere mittels eines Kennfelds.

**13.** Steuerverfahren eines Fahrzeugs, **dadurch gekennzeichnet, dass** die folgenden Schritte durchgeführt werden:

a) Bestimmung mindestens eines Gefährlichkeitsindikators nach einem der vorhergehenden Ansprüche; und
b) Anpassen der Steuerung des Fahrzeugs abhängig vom Gefährlichkeitsindikator.

**14.** Computerprogrammprodukt, das von einem Kommunikationsnetz heruntergeladen und/oder auf einem computerlesbaren Träger gespeichert und/oder von einem Prozessor oder einem Server ausgeführt werden kann, **dadurch gekennzeichnet, dass** das Computerprogrammprodukt Programmcodeanweisungen zur Durchführung des Verfahrens nach einem der vorhergehenden Ansprüche enthält, wenn das Programm auf einem Computer oder einem tragbaren Telefon ausgeführt wird.

**Claims**

**1.** Method of determining at least one dangerous driving indicator of a vehicle, in which the following steps are performed:

a) the position and/or the altitude of said vehicle is/are measured;
b) a dynamic model of the vehicle is constructed that links the position and/or the altitude of said vehicle to at least one slip parameter of the vehicle;
c) at least one slip parameter of the vehicle is determined by means of said dynamic model and said measured position and/or altitude; and
d) at least one dangerous driving indicator of the vehicle is determined by means of said slip parameter, by determining the number of times and/or frequency of exceeding at least one threshold by said slip parameter.

**2.** Method according to Claim 1, in which the position and/or the altitude of said vehicle is/are measured by means of a geolocation system.

**3.** Method according to one of the preceding claims, in which prior to the step of determining a slip parameter, preprocessing of said position and/or altitude measurements is performed, notably by means of oversampling and/or filtering.

**4.** Method according to one of the preceding claims, in which said dynamic model of the vehicle is a model in which the width of the vehicle is disregarded.

**5.** Method according to one of the preceding claims, in which said at least slip parameter of the vehicle is the lateral slip angle $\beta$ of the vehicle and/or the longitudinal slip rate SR of the vehicle.

**6.** Method according to Claim 5, in which said dynamic model of the vehicle determines said lateral slip angle $\beta$ by a formula of the type:

$$\beta(i) = \frac{v_{fy}(i) + v_{ry}(i)}{2 * v_L(i)}$$

with:

i : the instant of calculation,
$v_{fy}$ : the projection on the y axis of the speed of the front wheel,
$v_{ry}$ : the projection on the y axis of the speed of the rear wheel,
$v_L$: the projection on the longitudinal axis of the vehicle of the speed of the vehicle, and
x, y: the axes of the Lambert coordinate system,
the projections of said speeds being a function of said position of the vehicle.

7. Method according to Claim 6, in which said projections of the speeds of said dynamic model are determined by relationships of the type:

$$v_{ry}(i) = v_T(i) - l_r * \omega(i),$$

$$v_{fy}(i) = (v_T(i) + l_f * \omega(i)) * \cos \alpha(i) - v_L(i) * \sin \alpha(i),$$

$$\alpha(i) = \tan^{-1}(\frac{\omega(i)*(l_r+l_f)}{v_L(i)}),$$

$$v_L(i) = v_x(i) * \cos \psi(i) + v_y(i) * \sin \psi(i),$$

$$v_T(i) = -v_x(i) * \sin \psi(i) + v_y(i) * \cos \psi(i),$$

$$v_x(i) = \frac{x_{GPS}(i)-x_{GPS}(i-1)}{T_e},$$

$$v_y(i) = \frac{y_{GPS}(i)-y_{GPS}(i-1)}{T_e},$$

$$\omega(i) = \frac{\psi(i) - \psi(i-1)}{T_\rho}),$$

$$\psi(i) = \frac{180}{\pi} * \tan^{-1}(\frac{x_{GPS}(i)-x_{GPS}(i-1)}{y_{GPS}(i)-y_{GPS}(i-1)}),$$

with

$x_{GPS}, y_{GPS}$ : the coordinates of the vehicle in the Lambert coordinate system, corresponding to the measured position of the vehicle,
i : the instant of calculation,
$T_e$ : the sampling period,
$l_f$ : the distance between the centre of gravity and the front wheels of the vehicle, and
$l_r$ : the distance between the centre of gravity and the rear wheels of the vehicle.

8. Method according to one of Claims 5 through 7, in which said dynamic model determines the slip rate SR of the vehicle by means of a mapping function for mapping the coefficient of adhesion $\mu$ of the vehicle and weather conditions.

9. Method according to Claim 8, in which said coefficient of adhesion $\mu$ of the vehicle is determined by a formula of

the type:

$$\mu(i) = \frac{F_{driving}(i)}{F_z(i)}$$

with:

$$F_{res}(v) = C_{RR} + k * v + \frac{1}{2} * \rho_{air} * S * C_x * v^2,$$

$$F_{driving}(i) = M_{vehicle} * a_{veh}(i) + M_{vehicle} * g * \sin\big(\theta(i)\big) + F_{res}\big(v(i)\big),$$

$$F_z(i) = M_{vehicle} * g * \cos(\theta(i)),$$

$$\theta(i) = \tan^{-1}(Slope),$$

$$Slope(i) = \frac{\Delta h(i)}{\Delta d(i)},$$

$$\Delta h(i) = alt_{GPS}(i) - alt_{GPS}(i-1),$$

$$\Delta d(i) = \sqrt{[x_{GPS}(i) - x_{GPS}(i-1)]^2 + [y_{GPS}(i) - y_{GPS}(i-1)]^2},$$

with

$x_{GPS}, y_{GPS}$ : the coordinates of the vehicle in the Lambert coordinate system, corresponding to the measured position of the vehicle,
$alt_{GPS}$ : the measured altitude of the vehicle,
$i$ : the instant of calculation,
$a_{veh}$ : the acceleration of the vehicle,
$M_{vehicle}$ : the mass of the vehicle,
*Pair* : the density of the air,
*S* : the front surface area of the vehicle,
$C_x$ : the front aerodynamic drag coefficient of the vehicle,
*k* : the coefficient of viscous friction,
*v* : the speed of the vehicle,
$C_{RR}$ : the rolling resistance coefficient of the vehicle, and
g : the acceleration of gravity.

10. Method according to one of the preceding claims, in which said at least one dangerous driving indicator is displayed and/or recorded while the vehicle is being driven.

11. Method according to Claim 10, in which said at least one dangerous driving indicator is displayed and/or recorded on the dashboard of said vehicle, on an Internet site, or on a standalone portable device such as a geolocation system or a mobile phone.

12. Method according to one of the preceding claims, in which said dynamic model of the vehicle takes into account at least one of the following conditions: the state of the highway, the weather conditions, the pressure and state of wear of the vehicle's tyres, notably by means of mapping.

**13.** Method for controlling a vehicle, **characterized in that** the following steps are performed:

a) at least one dangerous driving indicator is determined according to one of the preceding claims; and
b) the control of said vehicle is adapted according to said dangerous driving indicator.

**14.** Computer program product downloadable from a communication network and/or recorded on a computer-readable medium and/or executable by a processor or a server, **characterized in that** said computer program product includes program code instructions for implementing the method according to one of the preceding claims, when said program is executed on a computer or on a mobile phone.

**Figure 1**

**Figure 2**

**Figure 3**

Figure 4

Figure 5a

Figure 5b

Figure 5c

Figure 5d

Figure 6

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1960829 A
- US 20020198655 A1
- US 20110112739 A1

**Littérature non-brevet citée dans la description**

- **KIENCKE U. ; NIELSEN L.** Automotive Control Systems. For Engine, Driveline, and Vehicle. Springer, 2000
- **RAJAMANI R.** Vehicle Control and Dynamics. Springer Science and Business Media, 2011